# FASCICULE DE BREVET EUROPEEN

(11) **EP 3 819 504 B1**
(45) Date de publication et mention de la délivrance du brevet: **27.12.2023**
(21) Numéro de dépôt: 19208665.0
(22) Date de dépôt: 12.11.2019
(51) Int. Cl.: F16B 23/00, B25B 13/48, B60B 3/16, F16B 41/00

(54) **DISPOSITIF DE FIXATION ANTIVOL DE SOLIDARISATION D'UNE ROUE SUR LE MOYEU D'UN VÉHICULE AUTOMOBILE**
DIEBSTAHLSICHERTE VERBINDUNGSVORRICHTUNG ZUR FESTEN VERBINDUNG EINES RADS MIT DER NABE EINES KRAFTFAHRZEUGS
ANTI-THEFT ATTACHMENT DEVICE FOR SECURING A WHEEL TO THE HUB OF AN AUTOMOBILE

(30) Priorité: 08.11.2019 FR 1912557
(43) Date de publication de la demande: 12.05.2021
(73) Titulaire: Société des Forges de Froncles, 52320 Froncles (FR)
(72) Inventeur: Dinville, Luc, 52000 Chaumont (FR)
(74) Mandataire: Cabinet Bleger-Rhein-Poupon

(56) Documents cités:
- DE-A1- 10 136 454
- GB-A- 2 298 691
- GB-A- 2 460 764
- US-A- 5 360 304
- US-A1- 2006 228 191

## Description

La présente invention a pour objet un dispositif de fixation antivol de solidarisation d'une roue sur le moyeu d'un véhicule automobile, de type comportant une partie distale filetée ou taraudée, et une partie proximale d'entraînement, permettant la transmission à ladite partie filetée d'un couple de serrage ou de desserrage au travers d'une clé ou analogue, et où l'accouplement de la clé ou analogue avec ladite partie d'entraînement est réalisé au travers d'empreintes concordantes que comportent d'une part ladite partie d'entraînement et d'autre part ladite clé ou analogue, les caractéristiques de forme, de dimensions et de positionnement desdites empreintes constituant un code.

Cette disposition permet d'éviter qu'un tiers, ne possédant pas la clef adaptée, puisse déposer frauduleusement les roues d'un véhicule.

On connaît déjà de nombreux dispositifs de vis ou écrou munis de moyens de codage, comme par exemple celui décrit dans le document FR 2 837 884 au Nom de la Demanderesse. La partie proximale de ce dispositif de vis comporte une tête globalement cylindrique émergeant d'un élément sensiblement en forme de disque de diamètre plus large, ladite tête comprenant des alvéoles positionnées de manière aléatoire sur sa circonférence pour former le code, l'emplacement où sont disposées lesdites alvéoles étant bordé périphériquement d'une collerette cylindrique, en sorte de n'en autoriser qu'une approche frontale.

Le principal inconvénient consiste en ce qu'un tel dispositif de vis n'interdit pas de la saisir par une approche latérale pour la manoeuvrer avec des pinces par exemple, sauf à ce qu'il soit enfoui dans un puits que doit alors comporter la jante.

Un autre inconvénient, non limité au dispositif du document précité, consiste en ce que l'accouplement de la clé avec la tête, est réalisé au travers d'ergots coopérant avec les alvéoles, et que lesdits ergots présentent une certaine fragilité.

On connaît également, par le document GB 2 298 691, un dispositif de vis qui comporte de plus un élément annulaire disposé en périphérie, monté en libre rotation axialement sur le corps de ladite partie proximale, permettant d'empêcher le saisissement par l'extérieur. Un tel dispositif n'est toutefois pas optimal.

La présente invention a pour but de proposer un dispositif de vis antivol permettant de résoudre ces inconvénients.

Selon l'invention, le dispositif de fixation antivol de solidarisation d'une roue sur le moyeu d'un véhicule automobile, est de type comportant une partie distale filetée ou taraudée, et une partie proximale d'entraînement, permettant la transmission à ladite partie filetée ou taraudée d'un couple de serrage ou de desserrage au travers d'une clé ou analogue, et où l'accouplement de la clé ou analogue avec ladite partie d'entraînement est réalisé au travers d'empreintes concordantes que comportent d'une part ladite partie d'entraînement et d'autre part ladite clé ou analogue, les caractéristiques de forme, de dimensions et de positionnement desdites empreintes constituant un code, la partie proximale comporte d'une part un élément annulaire disposé en périphérie, monté en libre rotation axialement sur le corps de ladite partie proximale, d'autre part, intérieurement audit élément annulaire, l'empreinte d'entraînement, concordante avec celle de ladite clé, tandis que ladite empreinte se présente sous la forme d'au moins une surélévation faisant saillie d'une face frontale sur une hauteur inférieure ou égale à celle dudit élément annulaire, et dont le contour périphérique présente des extensions radiales de formes quelconques, et il se caractérise en ce que la partie proximale comporte un plot de centrage, faisant saillie axialement de la face frontale, et délimitant une empreinte de forme annulaire, ledit plot de centrage est d'une hauteur supérieure à celle de l'élément annulaire, et il est garni d'un manchon en rotation libre.

Selon une caractéristique additionnelle du dispositif selon l'invention, les extensions radiales de l'empreinte étendent sur une distance supérieure à leur épaisseur dans le sens axial.

Cela réduit d'autant la possibilité pour un tiers de s'en saisir avec une paire de pinces.

Selon une autre caractéristique additionnelle du dispositif selon l'invention, l'empreinte présente des surélévations de hauteurs différentes.

De manière avantageuse, l'élément annulaire présente extérieurement une surface lisse en sorte qu'en association avec sa libre rotation, il ne soit pas possible de saisir la partie proximale avec des pinces.

Egalement de manière avantageuse, les découpes et surélévations de l'empreinte, de même que celles de l'empreinte concordante de la clé, sont élaborées sur une ébauche par frappe à froid, avec un usinage ultérieur minime.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- La figure 1 représente une vue en perspective d'un dispositif de fixation antivol selon l'invention.
- la figure 2 représente une vue en perspective d'une clé permettant le manoeuvrement du dispositif de la figure 1.
- la figure 3 représente une vue en perspective et en éclaté du dispositif de la figure 1.
- la figure 4 représente une vue en perspective et en éclaté de la clé de la figure 2.
- la figure 5 représente une vue en coupe selon l'invention un plan axial du dispositif de fixation antivol selon l'invention et de sa clé.

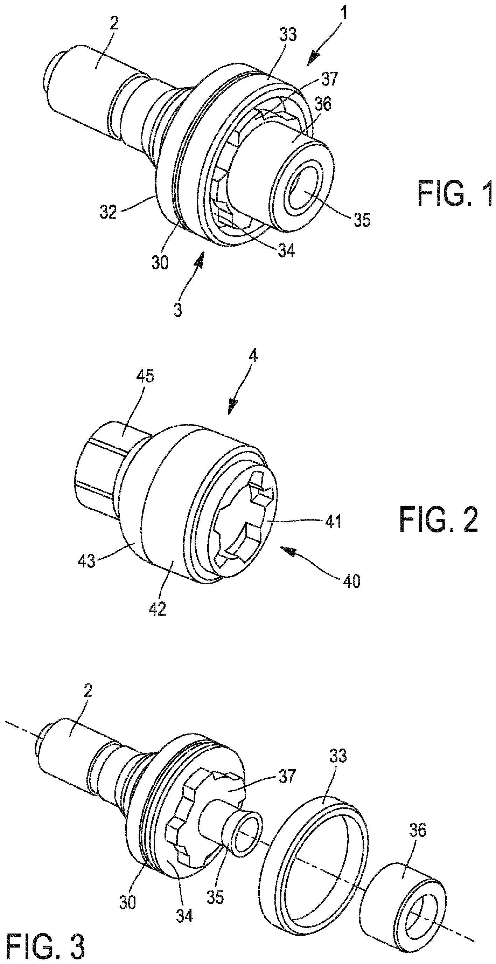

En référence aux figures 1, 3 et 5, on peut voir un dispositif 1 de fixation antivol selon l'invention, en l'occurrence dans une configuration de vis, sachant qu'il pourrait également se présenter sous la forme d'un écrou, destiné à être vissé sur un goujon.

Le dispositif 1 comporte une partie distale 2 consistant en une tige filetée destinée à être vissée, qui serait un trou taraudé dans le cas d'un écrou, et une partie proximale 3 destinée à constituer l'interface avec un outil d'entraînement, tel que la clé 4 représentée sur les figures 2, 4 et 5.

La partie proximale 3 se présente classiquement sous la forme d'une tête de vis comprenant essentiellement un corps 30 de forme globalement cylindrique comportant, du côté de la partie distale 2, une portée conique 31 et une portée plane 32, et du côté opposé, les moyens permettant la transmission d'un couple de serrage ou de desserrage au travers de la clé 4.

La partie proximale 3 comporte en outre un élément annulaire 33 disposé en périphérie, solidaire du corps 30 sur lequel il est monté en libre rotation sur le corps 30, axialement par rapport au dispositif 1.

Le corps 30 présente une face frontale 34 perpendiculaire à l'axe du dispositif 1, qui s'étend intérieurement à l'élément annulaire 33, de laquelle fait saillie centralement un plot 35 garni d'un manchon 36 en libre rotation.

La face frontale 34 comporte également, entre le plot 35 et le bord périphérique garni de l'élément annulaire 33, une empreinte 37, constituée d'une surélévation faisant saillie de la face frontale 34, et présentant un contour de forme quelconque, qui constitue le code.

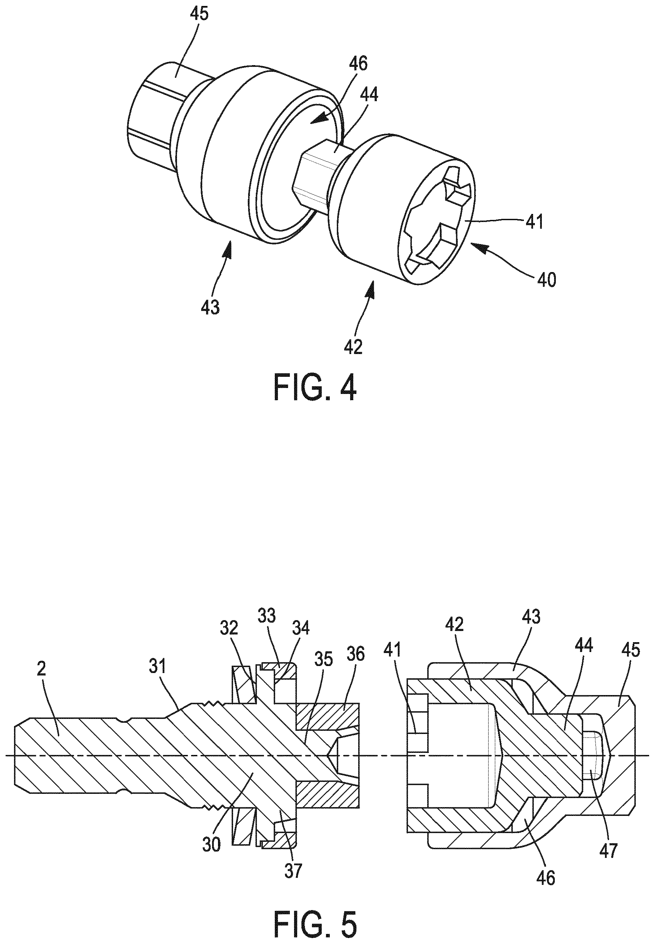

On notera que sur ces figures, l'empreinte 37 est d'épaisseur constante, inférieure à la hauteur de l'élément annulaire, comme cela est plus particulièrement visible sur la figure 5. Cependant, de manière avantageuse selon une variante, cette empreinte 37 peut, en plus de ses découpes périphériques, présenter une multiplicité de surélévations de hauteurs différentes, tout en restant de hauteurs inférieures à celle de l'élément annulaire 33.

L'empreinte 37 est ainsi localisée dans un espace de forme annulaire délimité extérieurement par l'élément annulaire 33. Cette empreinte 37 n'est ainsi accessible que par une approche frontale, tandis que le montage à rotation de l'élément annulaire 33 empêche la transmission d'un couple par son saisissement. Il en est de même pour le manchon 36.

D'autre part, l'empreinte femelle permettant de transmettre un couple, doit de plus être centrée par rapport à la paroi intérieure de l'élément annulaire 33. D'autre part des extensions de grande dimension dans le sens radial de l'empreinte 37, réduisent les espaces vides par rapport à l'intérieur de l'élément annulaire, et limitent encore les possibilités de saisissement.

La transmission du couple ne peut donc être effectuée qu'au moyen d'un outil spécifique, tel que la clé 4.

Cette clé 4, outre le fait qu'elle comporte une face 40 munie d'une empreinte 41 constituant le négatif de l'empreinte 36, présente la particularité d'être composée de deux parties assemblables 42 et 43 comme cela est visible sur les figures 4 et 5.

La partie 42 consiste en douille cylindrique qui comporte d'un côté l'empreinte 41, et de l'autre une extension axiale 44 de type à six pans.

La partie 43 se présente également sous la forme d'une douille cylindrique, qui comporte extérieurement une extension axiale 45, de type à six pans, destinée à l'accouplement à un outil conventionnel, non représenté, et du côté opposé une cavité cylindrique 46 destinée à recevoir étroitement la partie 42, et prolongée d'un logement 47, visible sur la figure 5, de profil à six pans creux dans lequel vient s'accoupler l'extension axiale 44.

La partie 42, la cavité 46 et le logement 47, sont dimensionnés en sorte que, en position normale d'utilisation, l'empreinte 41 déborde extérieurement la partie 43, permettant son accouplement à l'empreinte 36, et en position anormale, c'est-à-dire lors d'une tentative d'utilisation frauduleuse d'une clé 4 non adaptée au dispositif 1, le forçage axial provoque la rentrée de la partie 42 dans la cavité 46, et l'enfouissement de l'empreinte 41.

## Revendications

1. Dispositif de fixation antivol de solidarisation d'une roue sur le moyeu d'un véhicule automobile, de type comportant une partie distale (2) filetée ou taraudée, et une partie proximale d'entraînement, permettant la transmission à ladite partie filetée ou taraudée d'un couple de serrage ou de desserrage au travers d'une clé ou analogue (4), et où l'accouplement de la clé ou analogue (4) avec ladite partie d'entraînement est réalisé au travers d'empreintes concordantes (37, 41) que comportent d'une part ladite partie d'entraînement et d'autre part ladite clé (4) ou analogue, les caractéristiques de forme, de dimensions et de positionnement desdites empreintes constituant un code, la partie proximale (3) comportant d'une part un élément annulaire (33) disposé en périphérie, monté en libre rotation axialement sur un corps (30) de ladite partie proximale (3), d'autre part, intérieurement audit élément annulaire (3), l'empreinte d'entraînement (37), concordante avec celle (41) de ladite clé (4), tandis que ladite empreinte se présente sous la forme d'au moins une surélévation faisant saillie d'une face frontale (34) sur une hauteur inférieure ou égale à celle dudit élément annulaire (33), et dont le contour périphérique présente des extensions radiales de formes quelconques, **caractérisé en ce que** ladite partie proximale (3) comporte un plot (35) de centrage, faisant saillie axialement de ladite face frontale (34), et délimitant une empreinte de forme annulaire, ledit plot (35) de centrage est d'une hauteur supérieure à celle de l'élément annulaire (33), et il est garni d'un manchon (36) en rotation libre.

2. Dispositif de fixation antivol selon la revendication 1, **caractérisé en ce que** les extensions radiales de l'empreinte étendent sur une distance supérieure à leur épaisseur dans le sens axial.

3. Dispositif de fixation antivol selon la revendication 1 ou la revendication 2, **caractérisé en ce que** les surélévations présentent des hauteurs différentes.

4. Dispositif de fixation antivol selon l'une quelconque des revendications 1 à 3, **caractérisé en ce que** l'élément annulaire (33) présente extérieurement une surface lisse en sorte qu'en association avec sa libre rotation, il ne soit pas possible de saisir la partie proximale avec des pinces.

5. Dispositif de fixation antivol selon l'une quelconque des revendications 1 à 4, **caractérisé en ce que** les découpes et surélévations de l'empreinte, sont élaborées sur une ébauche par frappe à froid, avec un usinage ultérieur minime.

## Patentansprüche

1. Vorrichtung zur diebstahlsicheren Befestigung zum festen Verbinden eines Rades an der Nabe eines Kraftfahrzeugs, die einen distalen Teil (2) mit Gewinde oder Innengewinde und einen proximalen Gewindeteil, der die Übertragung eines Anzugsmoments oder eines Lösemoments durch einen Schlüssel oder ein Analogon (4) auf den Teil mit Gewinde oder Innengewinde ermöglicht, und wobei die Kupplung des Schlüssels oder des Analogons (4) mit dem Gewindeteil durch übereinstimmende Prägungen (37, 41) erfolgt, die einerseits der Gewindeteil und andererseits der Schlüssel (4) oder das Analogon aufweisen, wobei die Merkmale der Form, der Abmessungen und der Positionierung der Prägungen einen Code bilden, wobei der proximale Teil (3) einerseits ein Ringelement (33), das an dem Umfang angeordnet ist, das auf einem Körper (30) des proximalen Teils (3) axial frei drehbar montiert ist, andererseits in dem Inneren des Ringelements (3) die Gewindeprägung (37), die mit der (41) des Schlüssels (4) übereinstimmt, aufweist, während die Prägung in der Form von mindestens einer Erhöhung auftritt, die von einer Stirnfläche (34) auf einer Höhe, die kleiner als oder gleich der des Ringelements (33) ist, hervorsteht und deren Umfangskontur radiale Verlängerungen beliebiger Formen vorweist, **dadurch gekennzeichnet, dass** der proximale Teil (3) einen Zentrierklotz (35), der von der Stirnfläche (34) axial hervorsteht und eine ringförmige Prägung begrenzt, aufweist, wobei der Zentrierklotz (35) eine größere Höhe als die des Ringelements (33) besitzt und mit einer Hülse (36) in freier Drehung versehen ist.

2. Vorrichtung zur diebstahlsicheren Befestigung nach Anspruch 1,
**dadurch gekennzeichnet, dass** sich die radialen Verlängerungen der Prägung über einen Abstand, der größer als ihre Dicke ist, in der axialen Richtung erstrecken.

3. Vorrichtung zur diebstahlsicheren Befestigung nach Anspruch 1 oder 2,
**dadurch gekennzeichnet, dass** die Erhöhungen unterschiedliche Höhen vorweisen.

4. Vorrichtung zur diebstahlsicheren Befestigung nach einem der Ansprüche 1 bis 3, **dadurch gekennzeichnet, dass** das Ringelement (33) außen eine glatte Oberfläche vorweist, so dass es in Verbindung mit seiner freien Drehung nicht möglich ist, den proximalen Teil mit einer Zange zu greifen.

5. Vorrichtung zur diebstahlsicheren Befestigung nach einem der Ansprüche 1 bis 4, **dadurch gekennzeichnet, dass** die Ausschnitte und Erhöhungen der Prägung auf einem Rohling durch Kaltumformung mit einer geringfügigen Weiterbearbeitung hergestellt werden.

## Claims

1. An anti-theft fastening device for securing a wheel to the hub of a motor vehicle, of a type comprising a threaded or tapped distal part (2), and a proximal drive part, allowing the transmission to said threaded or tapped part of a tightening or loosening torque through a wrench or the like (4), and where the coupling of the wrench or the like (4) with said drive part is made through matching recesses (37, 41) comprising on the one hand said drive part and on the other hand said wrench (4) or the like, the features of shape, dimensions and positioning of said recesses constituting a code, the proximal part (3) comprising on the one hand an annular element (33) arranged on the periphery, mounted freely rotatable axially on a body (30) of said proximal part (3), on the other hand, internally to said annular element (3), the drive recess (37), matching that (41) of said wrench (4), while said recess is in the form of at least one raised element protruding from a front face (34) over a height less than or equal to that of said annular element (33), and whose peripheral contour has radial extensions of any shape, **characterized in that** said proximal part (3) comprises a centering pin (35), protruding axially from said front face (34), and delimiting an annular recess, said centering pin (35) being greater in height than that of the annular element (33), and being provided with a freely rotatable sleeve (36).

2. The anti-theft fastening device according to claim 1, **characterized in that** the radial extensions of the recess extend over a distance greater than their thickness in the axial direction.

3. The anti-theft fastening device according to claim 1 or claim 2, **characterized in that** the raised portions have different heights.

4. The anti-theft fastening device according to any one of claims 1 to 3,
**characterized in that** outwardly the annular element (33) has a smooth surface such that in combination with its free rotation, it is not possible to grip the proximal part with pliers.

5. The anti-theft fastening device according to any one of claims 1 to 4,
**characterized in that** the cut-outs and raised portions of the recess are prepared on a blank by cold stamping, with minimal subsequent machining.
